# FASCICULE DE BREVET EUROPEEN

(11) **EP 1 190 399 B1**
(45) Date de publication et mention de la délivrance du brevet: **25.02.2004**
(21) Numéro de dépôt: 00927334.3
(22) Date de dépôt: 12.05.2000
(51) Int. Cl.: G07F 7/10, H04Q 7/32

(54) **PROCEDE DE PRE-CONTROLE D'UN PROGRAMME CONTENU DANS UNE CARTE A PUCE ADDITIONNELLE D'UN TERMINAL**
VERFAHREN ZUR VORKONTROLLE EINES PROGRAMMS, ENTHALTEN IN EINER ZUSÄTZLICHEN CHIPKARTE IM ENDGERÄT
METHOD FOR PRE-CONTROLLING A PROGRAMME CONTAINED IN A TERMINAL ADDITIONAL CHIP CARD

(30) Priorité: 03.06.1999 FR 9907059
(43) Date de publication de la demande: 27.03.2002
(73) Titulaire: Gemplus, 13881 Gémenos Cedex (FR)
(72) Inventeur: BASQUIN, Bruno, F-13008 Marseille (FR)
(86) Numéro de dépôt international: PCT/FR2000/001285
(87) Numéro de publication internationale: WO 2000/075883

(56) Documents cités:
- US-A- 4 786 790
- US-A- 5 418 837
- US-A- 5 586 166
- US-A- 5 661 806
- US-A- 5 864 757

## Description

La présente invention concerne la sécurisation de programmes applicatifs fournis au moyen d'une carte à puce additionnelle insérable dans un terminal de télécommunications. Particulièrement, le terminal est un terminal radiotéléphonique mobile incluant une première carte pour l'identification d'abonné et les communications avec un réseau de télécommunications, ainsi qu'un lecteur de carte à puce additionnelle.

Dans un réseau de radiotéléphonie cellulaire de type GSM, il est prévu de fournir à l'abonné des services applicatifs basés sur l'exécution de programmes applicatifs au sein de la carte à puce SIM. Ces services sont mis en oeuvre par une technologie normalisée communément appelée SIM Application Toolkit. Une fonctionnalité particulière appelée la pro-activité permet à la carte SIM, dans le déroulement d'un programme, d'adresser des requêtes au monde extérieur : le terminal, l'abonné et le réseau.

Par exemple, de tels programmes applicatifs comprennent des menus pour interroger un serveur bancaire et conduire à distance des opérations bancaires à partir du terminal. Le développement des applications de services à valeur ajoutée s'exécutant dans la carte SIM nécessite des moyens de distribution et de maintenance de ces applications en cours d'abonnement. Cela est possible en personnalisant la carte SIM avec des programmes adéquats avant sa remise à l'abonné, ou en téléchargeant par voie radio ou en chargeant directement dans un point de vente ces programmes dans la carte SIM.

La technique antérieure telle que décrite dans le document WO9927505 prévoit également une carte à puce additionnelle qui est distincte de la carte SIM, et qui est insérable dans le terminal ou peut être reliée au terminal de la carte SIM par un lecteur externe. La deuxième carte est contrôlée par un programme s'exécutant dans la carte SIM. Le terminal joue un rôle transparent, en transmettant simplement les commandes élaborées par la carte SIM vers la deuxième carte. Cet échange de commandes. vise à développer des services mettant en oeuvre tout type de carte à puce. Par exemple, la deuxième carte est une carte bancaire pour offrir ainsi des services de télépaiement sur le terminal mobile.

La deuxième carte devient un moyen dé distribution d'applications en transportant des programmes réalisant des services à valeur ajoutée tels que ceux que l'on peut trouver actuellement dans la carte SIM.

L'introduction de la deuxième carte dans le terminal présente l'inconvénient que l'application n'est plus fournie nécessairement par l'opérateur du réseau et donc échappe à tout contrôle de son authenticité. La deuxième carte ne contient aucun moyen pour certifier son contenu par le terminal, la première carte ou le réseau.

L'invention a pour objectif de renforcer la sécurité avant la mise en oeuvre d'une application contenue dans une carte additionnelle et exécutable notamment par la première carte du terminal ou par le terminal lui-même.

A cette fin et selon l'invention, un procédé pour pré-contrôler l'exécution d'un programme contenu dans une deuxième carte à puce introduite dans un terminal radiotéléphonique mobile en addition d'une première carte à puce contenant des données d'identité d'abonné liées à un réseau de radiotéléphonie auquel le terminal est relié, est caractérisé en ce qu'il comprend une authentification de la deuxième carte à puce par la première carte à puce préalablement à l'exécution du programme.

L'authentification évite ainsi l'utilisation frauduleuse, le piratage et les copies de programme (s) applicatif(s) dans la deuxième carte.

Au sens de l'invention, une deuxième carte à puce est une carte quelconque parmi une pluralité de cartes additionnelles contenant des programmes applicatifs différents, à raison d'un ou de plusieurs programmes par deuxième carte, indépendamment du moyen logiciel de communication entre celle-ci, la première carte et le terminal.

La pluralité de deuxièmes cartes permet à un opérateur de proposer à ses abonnés de nouveaux services commercialisés par un circuit de distribution classique sous la forme des deuxièmes cartes à insérer dans le terminal, tout en gardant le contrôle des services proposés.

Selon une première réalisation, l'authentification de la deuxième carte par la première carte peut comprendre les étapes de :
- appliquer un identifiant du programme qui est transmis par la deuxième carte à. la première carte, et une clé à un algorithme contenu dans la première carte de manière à produire un résultat, et
- comparer le résultat et un certificat qui est transmis par la deuxième carte à la première carte, afin d'exécuter le programme seulement en cas d'égalité de ceux-ci.

L'authentification peut alors comprendre une sélection de la clé dans une table de clés contenue dans la première carte en fonction de l'identifiant de programme.

Selon une deuxième réalisation, l'authentification de la deuxième carte par la première carte peut comprendre les étapes de :
- transmettre un nombre aléatoire de la première carte à la deuxième carte ;
- appliquer le nombre aléatoire transmis et une clé à un algorithme contenu dans la deuxième carte de manière à produire une signature transmise à la première carte ;
- appliquer le nombre aléatoire et une clé à un algorithme contenu dans la première carte de manière à produire un résultat ; et
- comparer le résultat à la signature transmise dans la première carte afin d'exécuter le programme seulement en cas d'égalité de ceux-ci.

L'authentification peut alors comprendre une sélection de la clé dans une table de clés contenue dans la première carte en fonction d'un identifiant de programme transmis depuis la deuxième carte à la première carte.

On peut aussi prévoir en plus une authentification de la première carte par la deuxième carte, qui peut comprendre, selon une première réalisation, les étapes de :
- transmettre un champ prédéterminé d'un numéro depuis la première carte vers la deuxième carte ;
- comparer le champ prédéterminé avec un numéro dans la deuxième carte afin d'exécuter le. programme ou de lire son contenu seulement en cas d'égalité de ceux-ci.

Le champ prédéterminé peut alors comprendre au moins l'indicatif du réseau de télécommunications contenu dans un numéro d'identité de la première carte.

L'authentification de la première carte par la deuxième carte peut comprendre selon une deuxième réalisation les étapes de :
- lire un nombre aléatoire depuis la première carte dans la deuxième carte ;
- appliquer le nombre aléatoire et une clé à un algorithme contenu dans la première carte de manière à produire une signature transmise à la deuxième carte ;
- appliquer le nombre aléatoire et une clé à un algorithme contenu dans la deuxième carte de manière à produire un résultat ; et
- comparer le résultat à la signature transmise dans la deuxième carte afin d'exécuter le programme ou de lire son contenu seulement en cas d'égalité de ceux-ci.

L'authentification peut alors comprendre une sélection de la clé dans une table de clés contenue dans la première carte en fonction de l'identifiant de programme transmis depuis la deuxième carte à la première carte.

Le procédé est plus efficace lorsque l'authentification est mutuelle entre les première et deuxième cartes. Il comprend :
soit une première authentification de la deuxième carte par la première carte et une deuxième authentification de la première carte par la deuxième carte qui succède à la première authentification lorsque la deuxième carte est authentifiée par la première carte et qui est suivie de l'exécution du programme lorsque la première carte est authentifiée par la deuxième carte,
soit une première authentification de la première carte par la deuxième carte et une deuxième authentification de la deuxième carte par la première carte qui succède à la première authentification lorsque la première carte est authentifiée par la deuxième carte et qui est suivie de l'exécution du programme lorsque la deuxième carte est. authentifiée par la première carte.

Toutes les premières cartes ne sont pas nécessairement à authentifier par une deuxième carte. Au moins une partie de l'authentification peut être exécutée en réponse à une demande d'authentification transmise de la deuxième carte à la première carte.

La première carte peut ne pas contenir les moyens matériels ou logiciels pour participer à l'authentification. Dans ce cas, le procédé peut comprendre des étapes de l'authentification exécutées dans un serveur du réseau de télécommunications en réponse à une demande de la première carte. L'exécution du programme qu'elle soit au moins partiellement dans la première carte, ou le terminal, ou dans la deuxième carte requiert une vérification préalable de la compatibilité de'ces trois entités. A cet égard, le procédé peut comprendre une lecture de caractéristiques pour l'exécution du programme dans la deuxième carte depuis la première carte ou le terminal en réponse à une introduction de la deuxième carte dans un moyen de lecture relié au terminal, et une analyse des caractéristiques comparativement à des capacités matérielles et logicielles de la première carte et/ou du terminal pour refuser la deuxième carte lorsque lesdites caractéristiques sont incompatibles avec la première carte et/ou le terminal.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme d'un réseau de radiotéléphonie cellulaire avec un terminal mobile détaillé;
- la figure 2 est un algorithme d'étapes principales du procédé de pré-contrôle d'exécution de programme selon l'invention ;
- la figure 3 est un algorithme d'authentification mutuelle d'une première carte et d'une deuxième carte reliées au terminal ;
- la figure 4 est un algorithme d'une première authentification de la deuxième carte par la première carte selon une première réalisation ;
- la figure 5 est un algorithme d'une première authentification de la deuxième carte par la première carte selon une deuxième réalisation ;
- la figure 6 est un algorithme d'une deuxième authentification de la première carte par la deuxième carte selon une première réalisation ; et
- la figure 7 est un algorithme d'une deuxième authentification de la première carte par la deuxième carte selon une deuxième réalisation.

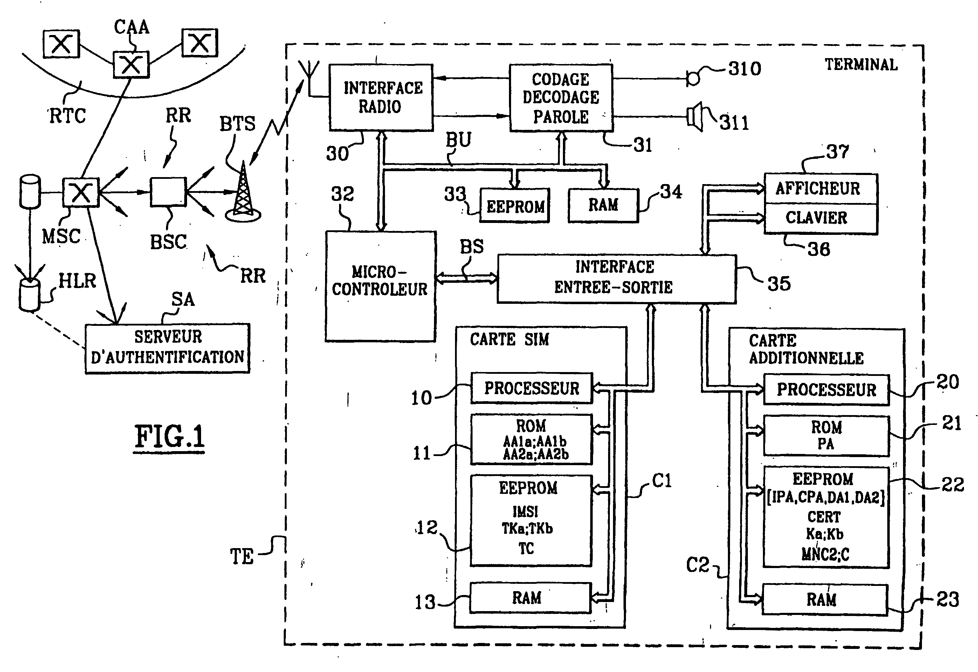

On se réfère, à titre d'exemple, au contexte d'un réseau de télécommunications du type réseau de radiotéléphonie cellulaire numérique RR de type GSM, .comme montré à la figure 1. Un terminal radiotéléphonique mobile TE du réseau de radiotéléphonie comprend une première carte à puce C1 constituant un module à microprocesseur amovible du terminal, ainsi qu'une deuxième carte à puce C2, dite carte applicative additionnelle, soit reliée au terminal TE par l'intermédiaire d'un lecteur de carte distinct du terminal, soit logée de manière amovible dans le terminal.

Dans la figure 1, le réseau RR est schématisé par un commutateur du service mobile MSC pour la zone de localisation où le terminal mobile TE se trouve à un instant donné, et une station de base BTS reliée au commutateur MSC par un contrôleur de station de base BSC et au terminal TE par voie radio. Les entités MSC, BSC et BTS constituent principalement un réseau fixe à travers lequel sont transmis notamment des messages de signalisation à canaux sémaphores, de contrôle, de données et de voix. L'entité principale du réseau RR susceptible d'interagir avec la première carte dans le terminal TE est le commutateur de service mobile MSC associé à un enregistreur de localisation des visiteurs VLR et relié à au moins un commutateur téléphonique à autonomie d'acheminement CAA du réseau téléphonique commuté RTC. Le commutateur MSC gère des communications pour des terminaux mobiles visiteurs, y compris le terminal TE, se trouvant à un instant donné dans la zone de localisation desservie par le commutateur MSC. Le contrôleur de station de base BSC gère notamment l'allocation de canaux aux terminaux mobiles visiteurs, et la station de base BTS couvre la cellule radioélectrique où le terminal MS se trouve à l'instant donné.

Le réseau de radiotéléphonie RR comprend également un enregistreur de localisation nominal HLR relié aux enregistreurs VLR et analogue à une base de données. L'enregistreur HLR contient pour chaque terminal radiotéléphonique notamment l'identité internationale IMSI (International Mobile Subscriber Identity) de la première carte à puce C1, dite carte SIM (Subscriber Identity Mobile), incluse dans le terminal TE, c'est-à-dire l'identité de l'abonné possesseur de la carte SIM, le profil d'abonnement de l'abonné et le numéro de l'enregistreur VLR auquel est rattaché momentanément le terminal mobile.

Le terminal TE détaillé à la figure 1 comprend une interface radio 30 avec le réseau de radiotéléphonie RR, comprenant principalement un duplexeur de voies de transmission et de réception, des circuits de transposition de fréquence, des convertisseurs analogique-numérique et numérique-convertisseurs analogique-numérique et numérique-analogique, un modulateur et un démodulateur, et un circuit de codage et décodage de canal. Lé terminal TE comprend également un circuit de codage et décodage de parole 31 relié à un microphone 310 et un haut-parleur 311, un microcontrôleur 32 associé à une mémoire non volatile de programmes EEPROM 33 et une mémoire de données RAM 34, et une interface entrée-sortie 35 desservant les cartes à puce C1 et C2, un clavier 36 et un afficheur graphique 37. Le microcontrôleur 32 est relié par un bus BU à l'interface 30, au circuit 31, et aux mémoires 33 et 34 et par un autre bus BS à l'interface entrée-sortie 35. Le microcontrôleur 32 gère tous les traitements des données en bande de base que le terminal reçoit et transmet après transposition en fréquence, notamment relatifs aux couches de protocole 1, 2 et 3 du modèle ISO, et supervise des échanges de données entre le réseau RR à travers l'interface radio 30 et la première carte à puce C1 à travers l'interface entrée-sortie 35.

La carte à puce SIM C1 est reliée- à l'interface entrée-sortie 35 incluant au moins un lecteur de carte dans le terminal, et des prises périphériques du terminal mobile. La carte à puce C1 contient principalement un microprocesseur 10, une mémoire 11 de type ROM incluant un système d'exploitation de la carte et des algorithmes de communication, d'application et d'authentification spécifiques, une mémoire non volatile 12 de type EEPROM qui contient toutes les caractéristiques liées à l'abonné, notamment l'identité internationale de l'abonné IMSI, et une mémoire 13 de type RAM destinée essentiellement au traitement de données à recevoir du microcontrôleur 32 inclus dans le terminal et la deuxième carte C2 et à transmettre vers ceux-ci.

Comme montré à la figure 1, un serveur d'authentification SA est optionnellement prévu comme entité interne du réseau de radiotéléphonie RR et est relié à un ou plusieurs couples de commutateur de services mobiles MSC et d'enregistreur de localisation des visiteurs VLR à travers le réseau de signalisation du réseau RR. L'adresse du serveur SV est pré-mémorisée dans la mémoire 12 de la carte C1.

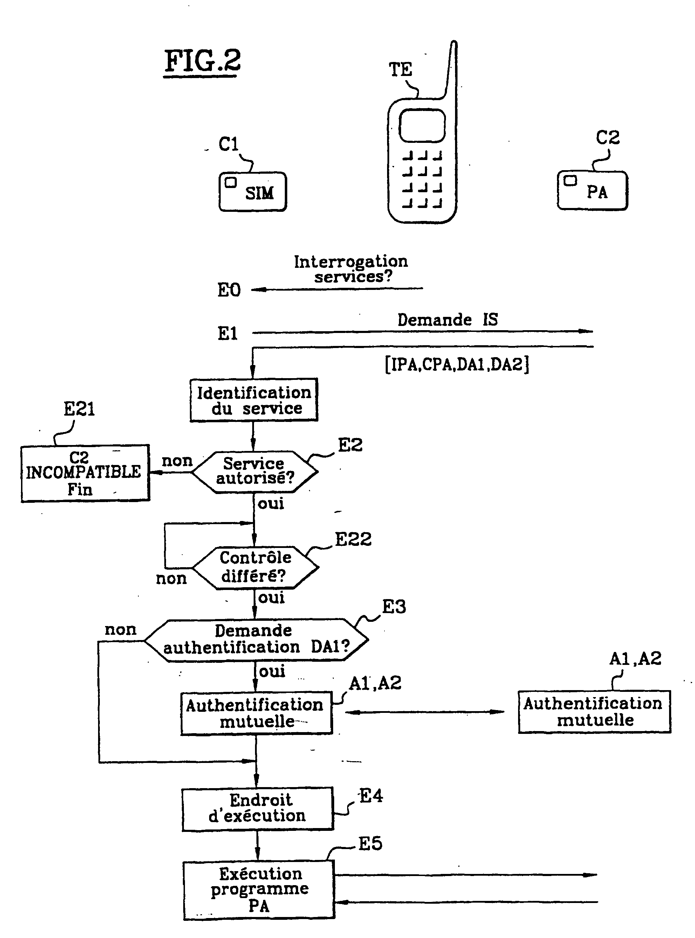

Plusieurs logiciels sont principalement téléchargés dans les mémoires ROM 11 et EEPROM 12 pour gérer des applications dans des cartes additionnelles C2. En particulier, l'algorithme du procédé de pré-contrôle montré à la figure 2 est implémenté dans les mémoires 11 et 12.

Comme la carte SIM C1, la deuxième carte C2 comprend également un microprocesseur 20, une mémoire ROM 21 incluant un système d'exploitation de la carte C2 et au moins partiellement un programme applicatif PA et un algorithme d'authentification spécifiques, une mémoire non volatile 12 de type EEPROM contenant, un identifiant IPA du programme applicatif ainsi que des caractéristiques CPA requises pour l'exécution du programme et une ou deux demandes d'authentification DA1 et DA2, et une mémoire RAM 13 qui traite des données à recevoir du microcontrôleur 32 et du processeur 10. La carte C2 est par exemple une carte bancaire, une carte de porte-monnaie électronique, une carte de jeux, ou une carte de visite ; dans ce dernier cas, la carte de visite est destinée à insérer le nom et le numéro de -téléphone de la personne ayant remis la carte dans le répertoire téléphonique de la carte SIM et/ou à appeler automatiquement ladite personne.

Les mémoires ROM et EEPROM 11, 12, 21 et 22 dans les cartes C1 et C2 comprennent des logiciels de communication pour dialoguer d'une part avec le microcontrôleur 32 du terminal TE, d'autre part entre les processeurs 10 et 20 à travers le terminal TE, c'est-à-dire à travers le microcontrôleur 32 et l'interface entrée-sortie 36.

Pour dialoguer entre elles, la carte SIM C1 et la carte additionnelle C2 sont du type pro-active afin de déclencher des actions dans le terminal mobile MS au moyen de commandes pré-formatées suivant le protocole "T = 0" de la norme ISO 7816-3 et encapsulées selon la recommandation GSM 11.14 (SIM - Toolkit). Cette recommandation permet une extension du jeu de commandes du système d'exploitation inclus dans la mémoire 11, 21 de la carte à puce C1, C2 pour mettre à disposition-de l'autre carte C2, C1 des données transmises par la carte à puce C1, C2. Comme on le verra dans la suite, le terminal TE peut être transparent à certains échanges de données entre les cartes C1 et C2, ou peut communiquer avec l'une des cartes sans communiquer avec l'autre.

Comme montré à la figure 2, le procédé de pré-contrôle d'exécution d'un programme applicatif PA contenu dans la deuxième carte C2 comprend quatre étapes principales E1 à E4. Initialement, le procédé de pré-contrôle est déclenché à une étape E0 soit manuellement en sollicitant une touche de validation prédéterminée sur le clavier du terminal TE ou en validant une directive "VALIDER INSERTION CARTE ADDITIONNELLE" affichée sur l'écran du terminal après avoir insérée la carte C2 dans le lecteur, soit automatiquement par le terminal TE en réponse à un message de présence de carte transmis par le lecteur distinct du terminal TE ou intégré à l'interface entrée-sortie 35, comme celui de la carte C1. Le terminal TE invite alors la première carte C1, la carte SIM, à interroger la deuxième carte C2.

Selon la réalisation illustrée à la figure 2, tout se passe au cours des étapes suivantes E1 à E4, comme si le terminal TE, en fait le microcontrôleur 32 et l'interface entrée-sortie 35, est transparent aux données échangées entre les deux cartes.

A l'étape suivante E1, la carte C1 lit et mémorise en mémoire EEPROM 12 des informations de service IS dans la mémoire EEPROM 22 de la carte C2 à travers le terminal TE. Les informations de service contiennent l'identifiant IPA du programme applicatif PA, les caractéristiques CPA requises pour l'exécution du programme et bien souvent une demande d'authentification DA. Les caractéristiques CPA sont notamment un type d'environnement logiciel, une capacité de mémoire et des paramètres matériels du terminal TE nécessaires à l'exécution du programme PA, ainsi qu'une interdiction ou autorisation d'exécution du programme PA en dehors de la deuxième carte CA. La première carte C1, grâce aux informations IS lues dans la deuxième carte C2, a ainsi connaissance de la nature de l'application correspondant au programme applicatif contenu dans la deuxième carte.

Si à l'étape suivante E2, la première carte C1 constate une incompatibilité du terminal TE, y compris la carte SIM C1, avec les caractéristique de programme applicatif CPA, la carte C1 refuse de poursuivre le procédé de pré-contrôle à une étape E21, et signale un refus au terminal TE pour qu'il affiche un message "CARTE ADDITIONNELLE INCOMPATIBLE".

Dans le cas contraire, la carte C1 décide de poursuivre ou de ne pas poursuivre le procédé de pré-contrôle à une étape intermédiaire E22. Si la carte C1 ne poursuit pas immédiatement le procédé de pré-contrôle, par exemple en raison d'un appel du terminal, la carte C1 diffère le pré-contrôle pour ultérieurement rapatrier le programme PA ou le faire exécuter dans la carte C2.

Si, après l'étape E22, la première carte C1 poursuit le procédé de pré-contrôle, elle vérifie dans les caractéristiques de programme applicatif CPA lues dans la carte C2 qu'une authentification au moins de l'une des cartes est requise par la deuxième carte C2 à l'étape E3.

A défaut de demande d'authentification, le procédé de pré-contrôle passe de l'étape E3 à l'étape E4 consistant à décider de l'endroit où le programme applicatif PA doit être exécuté. L'endroit d'exécution du programme est choisi parmi les trois entités que sont la première carte C1 dite carte SIM, la deuxième carte C2 dite carte additionnelle, et le terminal TE, en utilisant les commandes pro-actives de l'application Toolkit de la carte SIM avec le terminal.

Selon une première variante, le programme applicatif PA est téléchargé depuis la deuxième carte C2 dans la première carte C1 par l'intermédiaire des moyens logiciels de lecteur de cartes multiples ("multiple cardreader") de l'application Toolkit, pour que le programme PA soit exécuté dans la carte C1 à l'étape suivante E5.

Selon une deuxième variante, le programme PA-est exécuté dans la deuxième carte C2 à l'étape E5. Selon une première option, le programme PA est lancé sous la commande de la carte SIM C1 qui laisse ensuite l'initiative des échanges des commandes et réponses pour l'exécution du programme au terminal TE qui communique directement avec la deuxième carte. Selon une deuxième option, le programme PA est lancé sous la commande de la carte SIM C1 et tous les échanges de commande et de réponse sont effectués entre la carte C2 et le terminal TE à travers la carte C1 qui donne l'illusion au terminal de contenir et d'exécuter elle-même le programme PA.

Selon une troisième variante, le programme PA est téléchargé depuis la deuxième carte C2 dans le terminal TE et est exécuté à l'étape E5 dans un environnement logiciel d'exécution implémenté initialement à cet effet dans le terminal.

Après l'étape E4, le programme PA lu dans la carte C2 est exécuté à l'étape E5. Ce programme fournit un service à l'abonné par exemple par affichage de menus textuels sur l'afficheur 37, acquisition de données de l'abonné par la carte SIM C1, envoi de requêtes vers le réseau RR ou RTC, et interprétation de réponse aux requêtes.

Selon une autre réalisation, les opérations effectuées dans la carte SIM C1 aux étapes E1 à E4 et montrées à gauche dans la figure 2, à l'exception de celles relatives à l'authentification mutuelle décrite en détail ci-après, sont exécutées dans le terminal TE, c'est-à-dire sous la commande du microcontrôleur 32. Le terminal lit ainsi les informations de service IS[IPA, CPA, DA] à l'étape E1 et décide lui-même de poursuivre le pré-contrôle de l'exécution du programme aux étapes E2, E3 et E4.

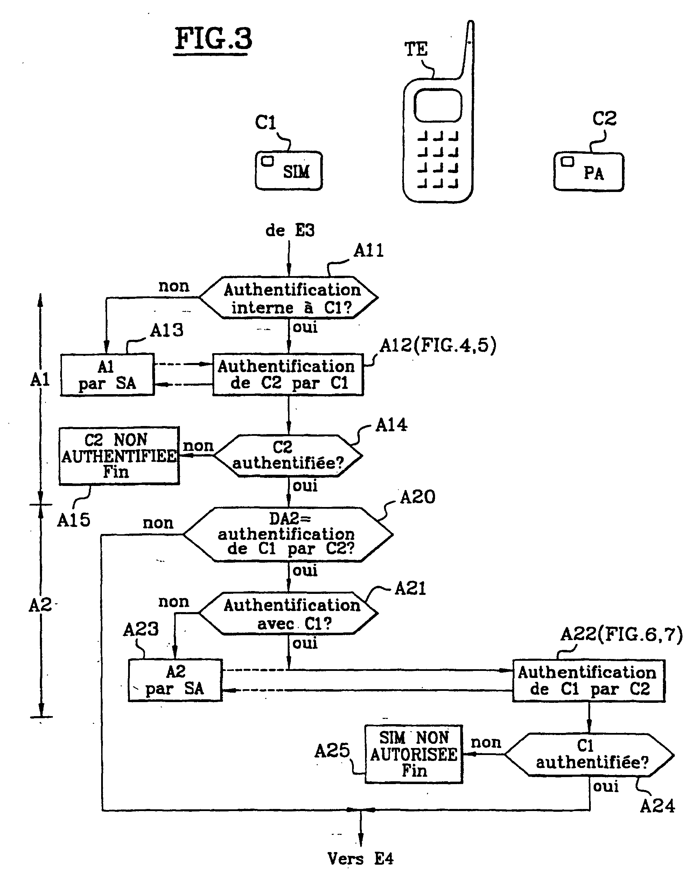

En revenant à l'étape E3 de la figure 2, la première carte C1 déclenche une authentification mutuelle des cartes lorsqu'une demande d'authentification DA1 est contenue dans les informations de service IS lues dans la carte C2 et mémorisées dans la carte C1. L'authentification mutuelle comprend, selon la réalisation illustrée à la figure 3, une première authentification A1 de la deuxième carte C2 par la première carte C1, puis en réponse à l'authenticité de la deuxième carte, une deuxième authentification A2 de la première carte C1 par la deuxième carte C2. Toutefois, l'ordre des authentifications peut être inversé : l'authentification A2 de la carte C1 par la carte C2 est d'abord effectuée, puis en réponse à l'-authenticité de la première carte, l'authentification A1 de la carte C2 par la carte C1 est ensuite effectuée.

La première authentification A1 assure qu'un programme applicatif contenu dans une carte additionnelle telle que la carte C2, ne peut être exécuté que lorsque ce programme est dûment certifié. L'authentification A1 comprend les étapes A11 à A15.

A l'étape A11 succédant à l'étape E3, la première carte C1, la carte SIM, vérifie qu'elle contient un premier algorithme d'authentification AA1 géré et écrit dans les mémoires ROM 11 et EEPROM 12. Dans l'affirmative, la carte C1 procède à l'authentification de la carte C2 à l'étape A12. Si la carte C2 ne peut être authentifée par la carte C1 à l'étape A11, la carte SIM C1 transmet via le terminal TE, un message de demande de première authentification au serveur d'authentification SA relié à l'enregistreur de localisation des visiteurs VLR auquel est temporairement rattaché le terminal TE, à travers le réseau fixe BTS-BSC-MSC ; le serveur SA procède directement à l'authentification de la carte C2, au lieu et place de la carte C1, comme selon l'une des deux premières authentifications décrites ci-après, à titre d'exemple. A la dernière étape A14 de la première authentification A1 par la carte C1 ou le serveur SA, l'authentification mutuelle est poursuivie par la deuxième authentification A2 si la carte C2 est authentifiée ; sinon, l'authentification mutuelle est arrêtée et le procédé de contrôle est terminé à l'étape A15, la carte SIM transférant au terminal TE le message "CARTE ADDITIONNELLE NON AUTHENTIFIEE" pour le visualiser temporairement sur l'afficheur 37.

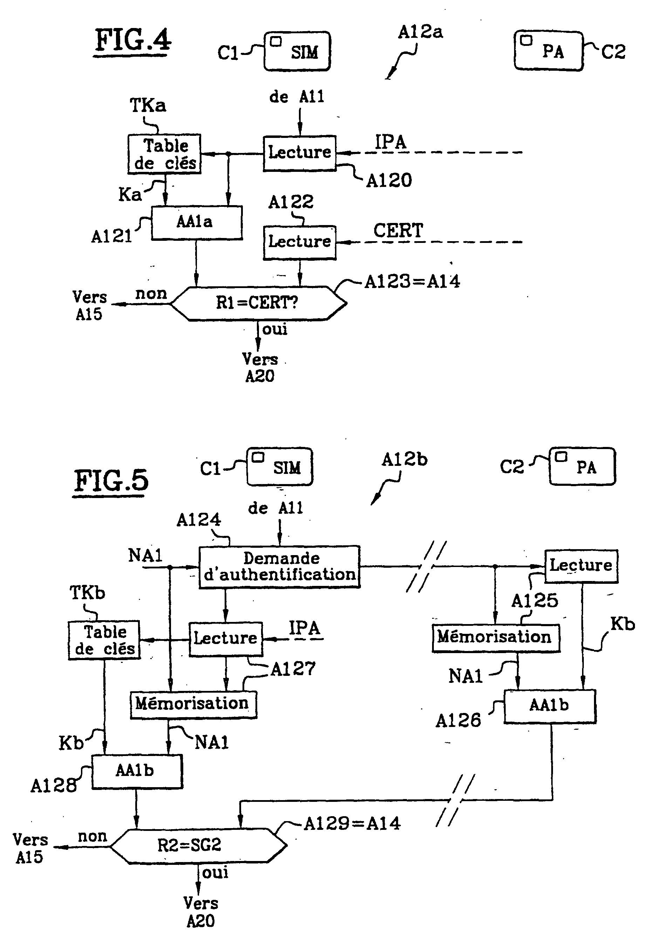

Selon une première réalisation montrée à la figure 4, une première authentification A12a de la carte C2 dans la carte C1 (ou dans le serveur SA) consiste à valider un certificat de deuxième carte CERT transmis préalablement dans les informations de services IS par la carte C2 à la carte C1 à l'étape E1, et comprend essentiellement quatre étapes A120 à A124.

A la première étape A120, l'identifiant IPA du programme applicatif PA est lu en mémoire EEPROM 12 de la carte C1. L'identifiant IPA sert d'adresse de lecture dans une table de clés secrètes TKa contenue dans la mémoire 12 pour y lire une clé secrète Ka correspondant au programme PA ou à une famille de programmes comprenant le programme PA. L'identifiant IPA et la clé Ka sont appliqués à un algorithme d'authentification AA1a qui produit un résultat R1 à l'étape A121. L'algorithme AA1a est par exemple du type DES (Data Encryption Standard), comme les autres algorithmes d'authentification cités dans la suite de la description. Le certificat CERT est lu dans la carte C1 à l'étape A122 pour être comparé au résultat R1 à l'étape A123 équivalente à l'étape A14 : si R1 = CERT, le certificat CERT est certifié et la carte C2 est authentifiée par la carte C1, l'authentification de la carte C1 étant exécutée à l'étape A2 ; sinon, le procédé d'authentification et de pré-contrôle est arrêté à l'étape A15.

Une autre première authentification A12b de la carte C2 dans la carte C1 est montrée à la figure 5. Elle comprend des étapes A124 à A129 et consiste à valider par la carte C1 le résultat SG d'un calcul effectué dans la deuxième carte C2 en fonction d'un nombre aléatoire NA transmis par la première carte C1.

A la suite de l'étape A11, la carte C1 sélectionne un nombre pseudo-aléatoire NA1 fourni par un générateur pseudo-aléatoire que le processeur 10 contient pour l'introduire dans un message de demande d'authentification transmis à la carte C2 à travers le terminal TE, à l'étape A124. En réponse à la demande d'authentification, la deuxième carte C2 mémorise temporairement le nombre aléatoire transmis NA1 en mémoire 23 et lit une clé secrète Kb dans la mémoire EEPROM 22 à l'étape A125. A l'étape A126, le nombre aléatoire-NA1 et la clé Kb sont appliqués à un algorithme d'authentification AA1b qui produit une signature SG2.

Quasi-simultanément aux étapes A125 et A126 sont réalisées des étapes analogues A127 et A128 dans la première carte C1. A l'étape A127, à la suite de l'établissement du message de demande d'authentification, le nombre aléatoire NA1 est écrit dans la mémoire RAM 13 de la carte C1, et l'identifiant IPA est lu en mémoire EEPROM 12 de la carte C1 afin d'adresser en lecture une table de clés secrètes Kb dans la mémoire EEPROM 12. Puis à l'étape A128, le nombre aléatoire NA1 lu dans la mémoire 13 et la clé Kb lue dans la table TKb sont appliqués à l'algorithme AA1b également implémenté en mémoires ROM 11 et EEPROM 12 de la carte C1. Un résultat R2 est produit par l'algorithme AA1b dans la carte C1.

Finalement à l'étape A129, la deuxième carte C2 transmet la signature SG2 à la première carte C1 à travers le terminal TE pour la comparer au résultat R2. L'étape A129 équivalente à l'étape A14 authentifie la carte C2 dans la carte C1 si R2 = SG2 afin d'exécuter l'étape A20, ou bien refuse la carte C2 lorsque R2 est différent de SG2 et l'étape E15 - arrête le procédé d'authentification et de pré-contrôle.

Dans l'une et l'autre des premières authentifications, préalablement à l'étape A120, A124, les clés secrètes Ka, Kb sont chargées dans la mémoire EEPROM 12 de la carte SIM C1 lors de la personnalisation initiale de la carte C1 au moment de l'abonnement de l'usager possesseur de la carte, ou bien sont téléchargées au cours de l'utilisation de la carte C1 par exemple pour être modifiées ou complétées.

Un troisième mode de réalisation de la première authentification consiste à transmettre à l'étape E1, depuis la deuxième carte vers la première carte : un identifiant de programme applicatif IPA, un identifiant de la deuxième carte, typiquement le numéro de série CSN pour Card Serial Number en anglais, et un nombre RND fonction de l'IPA et du CSN. Si la première carte contient déjà une autorisation pour le triplet IPA, CSN, RDN l'authentification est réussie. En revanche, si la première carte ne possède pas déjà une autorisation pour ce triplet, elle contacte un centre d'autorisation au moyen d'un canal sécurisé, et transmet à ce centre d'autorisation le triplet IPA, CSN, RND, ainsi qu'un numéro unique associé à la première carte comme son CSN ou l'IMSI.

Le centre d'autorisation vérifie dans une base de données que le triplet IPA, CSN, RND correspond à une carte autorisée. Si cela n'est pas le cas, le centre d'autorisation transmet à la première carte un message indiquant que la seconde carte n'est pas autorisée. Si le triplet correspond à une deuxième carte autorisée, le centre d'autorisation vérifie dans une base de données que la second carte n'est pas déjà associée à une autre « première » carte. Si tel est le cas, le centre d'autorisation envoie à la première carte un message signifiant un échec de l'authentification. Si la deuxième carte n'était pas encore associée à une première carte, le centre d'autorisation modifie la base de données de façon à associer la deuxième carte à la première carte, puis le centre d'autorisation envoie à la première carte un message signifiant la réussite de l'authentification. La première carte mémorise alors l'autorisation afin d'éviter de recontacter le centre d'autorisation lors d'une phase d'authentification ultérieure.

Dans ce troisième mode de réalisation de la première authentification on pourra, de façon optionnelle, associer une deuxième carte non plus à une seule première carte mais à un groupe de premières cartes, de façon à permettre l'utilisation d'une même deuxième carte par un petit groupe d'utilisateurs.

En revenant à la figure 3, la deuxième authentification A2 est commencée si à l'étape A14, l'égalité R1 = CERT selon l'authentification A12a ou l'égalité RES1 = SG selon l'authentification A12b est satisfaite. L'authentification A2 assure que la première carte C1, la carte SIM, est dûment habilitée par la deuxième carte C2 pour déclencher et lire le programme applicatif PA dans la carte C2.

La deuxième authentification A2 débute par une vérification préalable de la nécessité de celle-ci à une étape A20, en recherchant dans les informations de service IS dans la mémoire 12 la présence d'une demande de deuxième authentification DA2. Si l'authentification A2 n'est pas exécutée par défaut .de demande DA2, le procédé de pré-contrôle passe directement à la détermination de l'endroit d'exécution du programme applicatif E4. Dans le cas contraire, des étapes A21 à A25 de la deuxième authentification sont exécutées respectivement d'une manière analogue aux étapes A11 à A15 de la première authentification A1.

A l'étape A21 succédant à l'étape A20, la carte C1 vérifie qu'elle est capable de participer à la deuxième authentification proprement dite. En cas d'incapacité, la carte C1 envoie à travers le terminal TE un message de demande de deuxième authentification au serveur d'authentification SA qui participe à l'étape A23 à la deuxième authentification au lieu et place de la carte C1, comme à l'étape A22 décrite ci-après en détail-. A l'issue A24 de l'étape A22 ou A23 de l'authentification de la carte C1 avec la participation de la carte C1 ou du serveur SA par la carte C2, la carte C1 soit est authentifiée et le procédé de pré-contrôle passe à l'étape de détermination d'endroit d'exécution E4, soit n'est pas authentifiée et le procédé de pré-contrôle est terminé à l'étape A25, par présentation du message "CARTE SIM NON AUTORISEE" sur l'afficheur 37 du terminal TE.

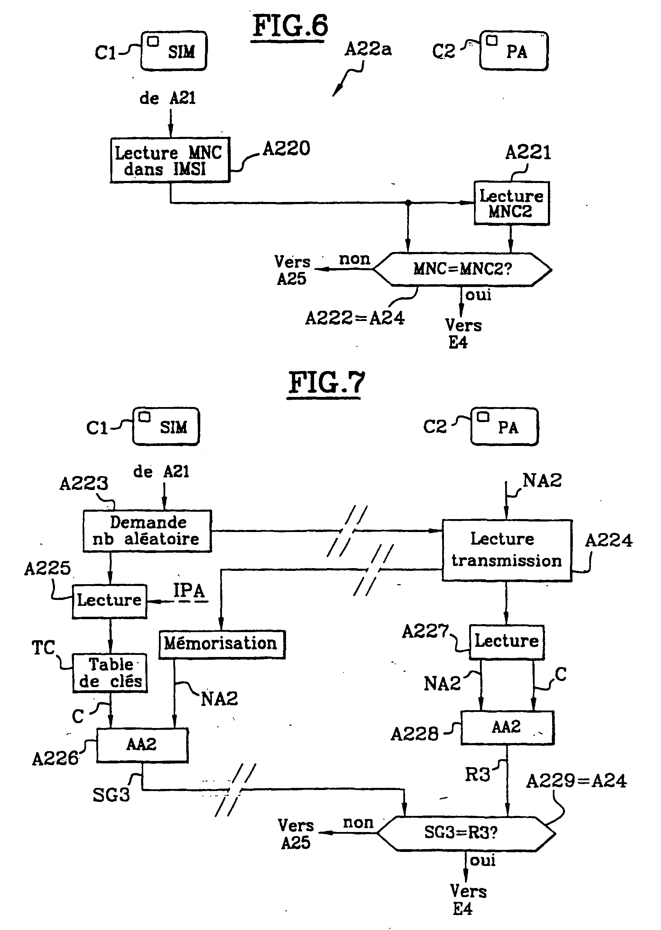

Selon une première réalisation montrée à la figure 6, la deuxième authentification A22a comprend des étapes A220 à A222 et consiste en une transmission d'un champ prédéterminé du numéro d'identité internationale IMSI (International Mobile Subscriber Identity) de l'abonné possesseur de la carte SIM C1 à la deuxième carte C2 et en une comparaison du champ transmis avec un numéro préalablement mémorisé dans la carte C2.

A une étape A220, le champ prédéterminé dans le numéro d'identité IMSI contenu dans la mémoire 12 de - la carte C1 est lu. Le champ prédéterminé est par exemple l'indicatif MNC (Mobile Network Code) à deux digits du réseau de radiotéléphonie RR auquel l'abonné est rattaché, ou bien l'ensemble de l'indicatif MNC et de l'indicatif du pays MCC (Mobile Country Code) auquel le réseau RR appartient, afin que la carte C2 émise généralement par l'opéràteur du réseau RR vérifie que la carte SIM appartienne bien à l'opérateur. -Selon une autre variante, le champ prédéterminé est un préfixe du numéro de l'abonné MSIN (Mobile Subscriber Identification Number) commun à un groupe d'abonnés.

En réponse au champ prédéterminé, par exemple l'indicatif MNC, dans la carte C2, un numéro équivalent MNC2 est lu dans la mémoire 22 à l'étape A221. L'étape suivante A222 équivalente à l'étape A24 compare les numéros MNC et MNC2 et dirige le procédé de pré-contrôle vers l'étape E4 en cas d'égalité ; sinon, l'authenticité de la carte C1 n'est pas reconnue par la carte C2 qui invite le terminal TE directement ou via la carte SIM S1 à visualiser le message de l'étape A25, et le procédé de pré-contrôle est arrêté.

Selon une deuxième réalisation montrée à la figure 7, la deuxième authentification A22b comprend des étapes A223 à A229 et consiste à valider par la carte C2 le résultat SG3 d'un calcul effectué dans la première carte C1 en fonction d'un nombre aléatoire NA2 demandé par la carte C1 à la carte C2.

A la suite de l'étape A21, la carte C1 envoie un message de demande de nombre aléatoire à la carte C2 via le terminal TE à l'étape A223. La carte C1 lit dans sa mémoire EEPROM 22 un-nombre aléatoire NA2 fourni par le processeur 20 qu'elle transmet via le terminal TE à la carte C1 qui le mémorise temporairement à l'étape A224. Dans la carte C1, l'étape de demande de nombre aléatoire est suivie d'une lecture A225 de l'identifiant de programme applicatif IPA dans la mémoire EEPROM 12. L'identifiant sert à adresser en lecture une table de clés secrètes TC pour y lire une clé C correspondant au programme PA, ou à une famille de programmes comprenant le programme PA. le nombre aléatoire reçu NA2 et la clé lue C sont appliqués à un algorithme de deuxième authentification AA2 dans la carte C1 fournissant une signature SG3 à l'étape A226, laquelle signature est transmise à la carte C2 via le terminal TE.

Dans la carte C2, après l'étape de sélection de nombre'aléatoire A224; la clé C en mémoire 22 est lue avec le nombre aléatoire NA2 à une étape A227 pour les appliquer à l'algorithme AA2 également implémenté en mémoires 21 et 22 dans la carte C2. A l'étape A228, l'algorithme AA2 produit un résultat R3. La signature SG3 reçue par la carte C2 est comparée au résultat R3 à l'étape A229 qui est équivalente à l'étape A24. La carte C1 est authentifiée par la carte C2 lorsque SG3 = R3 et le procédé de pré-contrôle passe à l'étape E4. Sinon, lorsque SG3 ≠ R3, la carte C2 refuse la carte C1 à l'étape A25 et la carte SIM demande au terminal TE d'afficher le message "CARTE SIM NON AUTORISEE" et le procédé de pré-contrôle est terminé.

D'une manière générale, si l'authentification de la carte C1 par la carte C2 échoue, tout ou partie des programmes contenus dans la carte C2 restent illisibles et non exécutables.

Selon un autre mode de réalisation, il y a une authentification mutuelle des deux cartes préalablement à l'exécution du programme de la deuxième carte, suivie d'une authentification durant toute la session d'exécution du programme. Dans un premier temps, chacune des carte génère un nombre aléatoire qu'elle transmet à l'autre carte. Sur la base des deux nombres aléatoires, chaque carte calcule une clé appelée clé de session. Chaque carte applique un algorithme de chiffrement utilisant la clé de session à un message connu, comme les deux nombres aléatoires, et obtient un message chiffré. Chaque carte transmet son message chiffré à l'autre carte, et vérifie l'authenticité du message chiffré reçu en provenance de l'autre carte.

L'exécution du programme peut se poursuivre lorsque les deux cartes se sont mutuellement authentifiées. Durant toute la session d'exécution du programme, tous les messages transmis d'une carte vers l'autres sont authentifiés de la manière suivante : un algorithme est appliqué au message à transmettre afin d'obtenir une empreinte dudit message. Un algorithme de signature utilisant la clé de session est appliqué à l'empreinte afin d'obtenir une signature qui sera transmise avec le message auquel elle correspond. Lorsqu'une carte reçoit de l'autre carte un message avec sa signature, elle recalcule une empreinte et une signature correspondant au message reçu, et vérifie que cette signature est identique à celle reçue avec le message.

## Revendications

1. Procédé pour pré-contrôler l'exécution d'un programme contenu dans une deuxième.carte à puce (C2) introduite dans un terminal radiotéléphonique mobile (TE) en addition d'une première carte à puce (C1) contenant des données d'identité d'abonné (C1) liées à un réseau de radiotéléphonie (RR) auquel le terminal est relié, **caractérisé en ce qu'**il comprend une authentification (A1) de la deuxième carte à puce. (C2) par la première carte à puce (C1) préalablement à l'exécution (E5) du programme.

2. 'Procédé conforme à la revendication 1, selon lequel l'authentification comprend les étapes de :
- appliquer (A121) un identifiant (IPA) du programme qui est transmis par la deuxième carte à la première carte, et une clé (Ka) à un algorithme (AA1a) contenu dans la première carte de manière à produire un résultat (R1), et
- comparer (A123) le résultat (R1) et un certificat (CERT) qui est transmis par la deuxième carte à la première carte, afin d'exécuter le programme seulement en cas d'égalité de ceux-ci.

3. Procédé conforme à la revendication 2, selon lequel l'authentification comprend une sélection (A120) de la clé (Ka) dans une table de clés (TKa) contenue dans la première carte (C1) en fonction de l'identifiant de programme (IPA).

4. Procédé conforme à la revendication 1, selon lequel l'authentification comprend les étapes de :
- transmettre (A124) un nombre aléatoire (NA1) de là première carte (C1 à la deuxième carte (C2) ;
- appliquer (A125, A126) le nombre aléatoire transmis et une clé. (Kb) à un algorithme (AA1b) contenu dans la deuxième carte de manière à produire une signature (SG2) transmise à la première carte (C1) ;
- appliquer (A128) le nombre aléatoire et une clé (Kb) à un algorithme (AA1b) contenu dans la première carte de manière à produire un résultat (R2) ; et
- comparer (A129) le résultat à la signature transmise dans la première carte afin d'exécuter le programme seulement en cas d'égalité de ceux-ci.

5. Procédé conforme à la revendication 4, selon lequel l'authentification comprend une sélection (A127) de la clé (Kb) dans une table de clés (TKb) contenue dans la première carte (C1) en fonction d'un identifiant de programme (IPA) transmis par la deuxième carte à la première carte.

6. Procédé selon l'une quelconque des revendications précédentes **caractérisé en ce qu'**il comprend aussi une authentification (A2) de la première carte à puce (C1) par la deuxième carte à puce (C2).

7. Procédé conforme à la revendication 6, selon lequel l'authentification (A2) de la première carte (C1) parla deuxième carte (C2) comprend les étapes de :
- transmettre (A220) un champ prédéterminé (MNC) d'un numéro (IMSI) depuis la première carte (C1) vers la deuxième carte ;
- comparer (A222) le champ prédéterminé (MNC) avec un numéro (MNC2) dans la deuxième carte afin d'exécuter le programme ou de lire son contenu seulement en cas d'égalité de ceux-ci.

8. Procédé conforme à la revendication 7, selon lequel le champ prédéterminé comprend au moins l'indicatif (MNC) du réseau de télécommunications (RR) contenu dans un numéro d'identité (IMSI) de la première carte.

9. Procédé conforme à la revendication 6, selon lequel l'authentification (A2) de la première carte (C1) par la deuxième carte (C2) comprend les étapes de :
- lire (A223, A224) un nombre aléatoire (NA2) depuis la première carte (C1) dans la deuxième carte (C2) ;
- appliquer (A226) le nombre aléatoire et une clé (C) à un algorithme (AA2) contenu dans la première carte de manière à produire une signature (SG3) transmise à la deuxième carte (C2) ;
- appliquer (A228) le nombre aléatoire (NA2) et une clé (C) à un algorithme (AA2) contenu dans la deuxième carte de manière à produire un résultat (R3) ; et
- comparer (A229) le résultat à la signature transmise dans la deuxième carte afin d'exécuter le programme ou de lire son contenu seulement en cas d'égalité de ceux-ci.

10. Procédé conforme à la revendication 9, selon lequel l'authentification comprend une sélection (A225) de la clé (C) dans une table de clés (TC) contenue dans la première carte. (C1) en fonction d'un identifiant de programme (IPA) transmis par la deuxième carte à la première carte.

11. Procédé conforme à l'une quelconque des revendications 6 à 10, comprenant 'une première authentification (A1) de la deuxième carte (C2) par .la première carte (C1) et une deuxième authentification (A2) de la première carte par la deuxième carte qui succède à la première authentification lorsque la deuxième carte est authentifiée par la première carte et qui est suivie de l'exécution du programme lorsque la première carte est authentifiée par la deuxième carte, ou bien une première authentification (A2) de la première carte (C1) par la deuxième carte (C2) et une deuxième authentification (A1) de la deuxième carte par la première carte qui succède à la première authentification lorsque la première carte est authentifiée par la deuxième carte et qui est suivie de l'exécution du programme lorsque la deuxième carte est authentifiée par la première carte.

12. Procédé conforme à l'une quelconque des revendications 6 à 11, selon lequel au moins une partie (A1, A2 ; A2) de l'authentification est exécutée seulement en réponse à une demande d'authentification (DA1 ; DA2) transmise de la deuxième carte (C2) à la première carte (C1).

13. Procédé conforme à l'une quelconque des revendications 6 à 12, comprenant des étapes de l'authentification exécutées dans un serveur' (SA) du réseau de télécommunications (RR) en réponse à une demande (A11, A21) de la première carte (C1).

14. Procédé conforme à l'une quelconque des revendications 6 à 13, comprenant une lecture (E1) de caractéristiques (CPA) pour l'exécution du programme dans la deuxième carte (C2) depuis la première carte (C1) ou le terminal (TE) en réponse à une introduction (E0 de la deuxième carte (C2) dans un moyen dé lecture (35) relié au terminal, et une analyse (E2) des caractéristiques comparativement à des capacités matérielles et logicielles de la première carte et/ou du terminal pour refuser la deuxième carte lorsque lesdites caractéristiques sont incompatibles avec la première carte et/ou le terminal.

15. Procédé conforme à l'une quelconque des revendications 6 à 14, comprenant entre l'authentification de carte (A1, A2) et l'exécution de programme (E5), un téléchargement (E5) du programme (PA) depuis la deuxième carte (C2) dans la première carte (C1) pour une exécution du programme (E5) dans la première carte (C1).

16. Procédé conforme à l'une quelconque des revendications 6 à 13, selon lequel le programme est lancé (E5) sous la commande de la première carte (C1) pour être exécuté dans la deuxième carte (C2) et des échanges de commandes et réponses sont effectués entre la deuxième carte (C2) et le terminal (TE) directement ou à travers la première carte (C1).

17. Procédé conforme à l'une quelconque des revendications 6 à 13, comprenant, entre l'authentification de carte (A1, A2) et l'exécution de programme (E5), un téléchargement du programme (PA) depuis la deuxième carte (C2) dans le terminal (TE) pour une exécution de programme (E5) dans le terminal.

## Patentansprüche

1. Verfahren zur Vorkontrolle der Ausführung eines in einer zweiten, in ein mobiles Funktelefonterminal (TE) zusätzlich zu einer ersten, mit einem mit dem Terminal verbundenen Funktelefonnetz (RR) verbundene Teilnehmeridentifikationsdaten (C1) enthaltende Chipkarte (C1) eingeführte Chipkarte (C2) enthaltenen Programms, **dadurch gekennzeichnet, dass** es vor der Ausführung (E5) des Programms eine Authentifizierung (A1) der zweiten Chipkarte (C2) durch die erste Chipkarte (C1) umfasst.

2. Verfahren gemäß Anspruch 1, nach dem die Authentifizierung folgende Etappen umfasst:
- Anwendung (A121) eines Kennzeichens (IPA) des Programms, das durch die zweite Karte auf die erste Karte angewendet wird, und eines Schlüssels (Ka) auf einen in der ersten Karte enthaltenen Algorithmus (AA1a), so dass ein Ergebnis (R1) produziert wird, und
- Vergleich (A123) des Ergebnisses (R1) und eines Zertifikats (CERT), das durch die zweite Karte auf die erste Karte übertragen wird, um das Programm nur im Fall der Ungleichheit der beiden auszuführen.

3. Verfahren gemäß Anspruch 2, nach dem die Authentifizierung eine Auswahl (A120) des Schlüssels (Ka) in einer in der ersten Karte (C1) in Abhängigkeit vom Programmkennzeichen (IPA) enthaltenen Schlüsselplatte (TKa) umfasst.

4. Verfahren gemäß Anspruch 1, nach dem die Authentifizierung die folgenden Etappen umfasst:
- Übertragen (A124) einer zufälligen Zahl (NA1) der ersten Karte (C1) auf die zweite Karte (C2);
- Anwendung (A125, A126) der übertragenen zufälligen Zahl und eines Schlüssels (Kb) auf einen in der zweiten Karte enthaltenen Algorithmus (AA1b), so dass eine auf die erste Karte (C1) übertragene Unterschrift (SG2) erzeugt wird;
- Anwenden (A128) der zufälligen Zahl und eines Schlüssels (Kb) auf einen in der ersten Karte enthaltenen Algorithmus (AA1b), so dass ein Ergebnis (R2) erzeugt wird; und
- Vergleich (A129) des Ergebnisses mit der auf die erste Karte übertragenen Unterschrift, um das Programm nur im Falle der Ungleichheit der beiden auszuführen.

5. Verfahren gemäß Anspruch 4, nach dem die Authentifizierung eine Auswahl (A127) des Schlüssels (Kb) in einer in der ersten Karte (C1) enthaltenen Schlüsselplatte (TKb), in Abhängigkeit eines durch die zweite Karte auf die erste Karte übertragenen Programmkennzeichens (IPA) umfasst.

6. Verfahren gemäß einem der vorherigen Ansprüche, **dadurch gekennzeichnet, dass** es ebenfalls eine Authentifizierung (A2) der ersten Chipkarte (C1) durch die zweite Chipkarte (C2) umfasst.

7. Verfahren gemäß Anspruch 6, nach dem die Authentifizierung (A2) der ersten Karte (C1) durch die zweite Karte (C2)die folgenden Etappen umfasst:
- Übertragen (A220) eines vorbestimmten Feldes (MNC) einer Nummer (IMSI) von der ersten Karte (C1) auf die zweite Karte;
- Vergleich (A222) des vorbestimmten Feldes (MNC) mit einer Nummer (MNC2) in der zweiten Karte, um das Programm auszuführen oder seinen Inhalt nur im Fall der Ungleichheit der beiden zu lesen.

8. Verfahren gemäß Anspruch 7, nach dem das vorbestimmte Feld wenigstens die Vorwahl (MNC) des in einer Identnummer (IMSI) der ersten Karte enthaltenen Telekommunikationsnetzes (RR) umfasst.

9. Verfahren gemäß Anspruch 6, nach dem die Authentifizierung (A2) der ersten Karte (C1) durch die zweite Karte (C2) die folgenden Etappen umfasst:
- Lesen (A223, A224) einer zufälligen Zahl (NA2) in der zweiten Karte (C2) von der ersten Karte (C1) aus;
- Anwenden (A226) der zufälligen Zahl und eines Schlüssels (C) auf einen in der ersten Karte enthaltenen Algorithmus (AA2), so dass eine auf die zweite Karte (C2) übertragene Unterschrift (SG3) erzeugt wird;
- Anwenden (A228) der zufälligen Zahl (NA2) und eines Schlüssels (C) auf einen in der zweiten Karte enthaltenen Algorithmus (AA2), so dass ein Ergebnis (R3) produziert wird; und
- Vergleich (A229) des Ergebnisses mit der auf die zweite Karte übertragenen Unterschrift, um das Programm auszuführen oder seinen Inhalt nur im Fall der Ungleichheit der beiden zu lesen.

10. Verfahren gemäß Anspruch 9, nach dem die Authentifizierung eine Auswahl (A225) des Schlüssels (C) in einer in der ersten Karte (C1) enthaltenen Schlüsselplatte (TC) in Abhängigkeit eines durch die zweite Karate auf die erste Karte übertragenen Programmkennzeichens (IPA) umfasst.

11. Verfahren gemäß Anspruch 6 bis 10 mit einer ersten Authentifizierung (A1) der zweiten Karte (C2) durch die erste Karte (C1) und einer zweiten Authentifizierung (A2) der ersten Karte durch die zweite Karte, die auf die erste Authentifizierung folgt, wenn die zweite Karte durch die erste Karte authentifiziert wird und auf die die Ausführung des Programms folgt, wenn die erste Karte durch die zweite Karte authentifiziert wird, oder einer ersten Authentifizierung (A2) der ersten Karte (C1) durch die zweite Karte (C2) und einer zweiten Authentifizierung (A1) der zweiten Karte durch die erste Karte, die auf die erste Authentifizierung folgt, wenn die erste Karte durch die zweite Karte authentifiziert wird und auf die die Ausführung des Programms folgt, wenn die zweite Karte durch die erste Karte authentifiziert wird.

12. Verfahren gemäß Anspruch 6 bis 11, nach dem wenigstens ein Teil (A1, A2; A2) der Authentifizierung nur als Antwort auf eine von der zweiten Karte (C2) auf die erste Karte (C1) übertragene Authentifizierungsanfrage (DA1; DA2) ausgeführt wird.

13. Verfahren gemäß Anspruch 6 bis 12, mit in einem Server (SA) des Telekommunikationsnetzes (RR) als Antwort auf eine Anfrage (A11, A21) der ersten Karte (C1) ausgeführten Authentifizierungsetappen.

14. Verfahren gemäß Anspruch 6 bis 13 mit einem Lesevorgang (E1) von Merkmalen (CPA) für die Ausführung des Programms in der zweiten Karte (C2) ab der ersten Karte (C1) oder dem Terminal (TE) als Antwort auf ein Einführen (E0) der zweiten Karte (C2) in ein mit dem Terminal verbundenes Lesemittel (35), und einer Analyse (E2) der Merkmale im Vergleich zu den materiellen und logistischen Kapazitäten der ersten Karte und / oder des Terminals, um die zweite Karte zurückzuweisen, wenn die genannten Merkmale mit der ersten Karte und / oder dem Terminal inkompatibel sind.

15. Verfahren gemäß Anspruch 6 bis 14 mit einem Herunterladen (E5) des Programms (PA) von der zweiten Karte (C2) in die erste Karte (C1) zwischen der Kartenauthentifizierung (A1, A2) und der Programmausführung (E5), um das Programm (E5) in ersten Karte (C1) auszuführen.

16. Verfahren gemäß Anspruch 6 bis 13, nach dem das Programm unter der Steuerung der ersten Karte (C1) gestartet (E5) wird, um in der zweiten Karte (C2) ausgeführt zu werden, und der Austausch von Befehlen und Antworten direkt zwischen der zweiten Karte (C2) und dem Terminal (TE) oder durch die erste Karte (C1) durchgeführt werden.

17. Verfahren gemäß Anspruch 6 bis 13 mit einem Herunterladen des Programms (PA) von der zweiten Karte (C2) in das Terminal (TE) zwischen der Kartenauthentifizierung (A1, A2) und der Programmausführung (E5), um ein Programm (E5) im Terminal auszuführen.

## Claims

1. A method for pre-controlling the execution of a program contained in a second smart card (C2) introduced into a mobile telephone terminal (TE) in addition to a first smart card (C1) containing subscriber identity data (C1) connected to a radio telephony network (RR) to which the terminal is connected, **characterised in that** it comprises an authentication (A1) of the second smart card (C2) by the first smart card (C1) prior to the execution (E5) of the program.

2. A method according to Claim 1, according to which the authentication comprises the steps of:
- applying (A121) an identifier (IPA) of the program which is transmitted by the second card to the first card, and a key (Ka) to an algorithm (AA1a) contained in the first card so as to produce a result (R1), and
- comparing (A123) the result (R1) and a certificate (CERT) which is transmitted by the second card to the first card, in order to execute the program only in the case of equality of these.

3. A method according to Claim 2, according to which the authentication comprises a selection (A120) of the key (Ka) in a table of keys (TKa) contained in the first card (C1) according to the program identifier (IPA).

4. A method according to Claim 1, according to which the authentication comprises the steps of:
- transmitting (A124) a random number (NA1) from the first card (C1) to the second card (C2);
- applying (A125, A126) the random number transmitted and a key (Kb) to an algorithm (AAlb) contained in the second card so as to produce a signature (SG2) transmitted to the first card (C1);
- applying (A128) the random number and a key (Kb) to an algorithm (AAlb) contained in the first card so as to produce a result (R2); and
- comparing (A129) the result with the signature transmitted in the first card in order to execute the program only in the case of equality of these.

5. A method according to Claim 4, according to which the authentication comprises a selection (A127) of the key (Kb) in a table of keys (TKb) contained in the first card (C1) according to a program identifier (IPA) transmitted by the second card to the first card.

6. A method according to any one of the preceding claims, **characterised in that** it also comprises an authentication (A2) of the first smart card (C1) by the second smart card (C2).

7. A method according to Claim 6, according to which the authentication (A2) of the first card (C1) by the second card (C2) comprises the steps of:
- transmitting (A220) a predetermined field (MNC) of a number (IMSI) from the first card (C1) to the second card;
- comparing (A222) the predetermined field (MNC) with a number (MNC2) in the second card in order to execute the program or read its contents solely in the case of equality of these.

8. A method according to Claim 7, according to which the predetermined field comprises at least the indicator (MNC) of the telecommunications network (RR) contained in an identity number (IMSI) of the first card.

9. A method according to Claim 6, according to which the authentication (A2) of the first card (C1) by the second card (C2) comprises the steps of:
- reading (A223, A224) a random number (NA2) from the first card (C1) in the second card (C2);
- applying (A226) the random number and a key (C) to an algorithm (AA2) contained in the first card so as to produce a signature (SG3) transmitted to the second card (C2);
- applying (A228) the random number (NA2) and a key (C) to an algorithm (AA2) contained in the second card so as to produce a result (R3); and
- comparing (A229) the result with the signature transmitted in the second card in order to execute the program or read its content solely in the case of equality of these.

10. A method according to Claim 9, according to which the authentication comprises a selection (A225) of the key (C) in a table of keys (TC) contained in the first card (C1) according to a program identifier (IPA) transmitted by the second card to the first card.

11. A method according to any one of Claims 6 to 10, comprising a first authentication (A1) of the second card (C2) by the first card (C1) and a second authentication (A2) of the first card by the second card which follows on from the first authentication when the second card is authenticated by the first card and which is followed by the execution of the program when the first card is authenticated by the second card, or a first authentication (A2) of the first card (C1) by the second card (C2) and a second authentication (A1) of the second card by the first card which follows on from the first authentication when the first card is authenticated by the second card and which is followed by the execution of the program when the second card is authenticated by the first card.

12. A method according to any one of Claims 6 to 11, according to which at least part (A1, A2; A2) of the authentication is executed solely in response to an authentication request (DA1; DA2) transmitted from the second card (C2) to the first card (C1).

13. A method according to any one of Claims 6 to 12, comprising authentication steps executed in a server (SA) of the telecommunications network (RR) in response to a request (A11, A21) from the first card (C1).

14. A method according to any one of Claims 6 to 13, comprising a reading (E1) of characteristics (CPA) for the execution of the program in the second card (C2) from the first card (C1) or the terminal (TE) in response to an insertion (E0) of the second card (C2) into a reading means (35) connected to the terminal, and an analysis (E2) of the characteristics compared with the hardware and software capabilities of the first card and/or of the terminal in order to refuse the second card when the said characteristics are incompatible with the first card and/or the terminal.

15. A method according to any one of Claims 6 to 14, comprising, between the card authentication (A1, A2) and the program execution (E5), a downloading (E5) of the program (PA) from the second card (C2) into the first card (C1) for an execution of the program (E5) in the first card (C1).

16. A method according to any one of Claims 6 to 13, according to which the program is launched (E5) under the control of the first card (C1) in order to be executed in the second card (C2) and exchanges of commands and responses are made between the second card (C2) and the terminal (TE) directly or through the first card (C1).

17. A method according to any one of Claims 6 to 13, comprising, between the card authentication (A1, A2) and the program execution (E5), a downloading of the program (PA) from the second card (C2) into the terminal (TE) for a program execution (E5) in the terminal.
